# EUROPÄISCHE PATENTSCHRIFT

(11) **EP 2 737 831 B1**
(45) Veröffentlichungstag und Bekanntmachung des Hinweises auf die Patenterteilung: **11.04.2018**
(21) Anmeldenummer: 13191719.7
(22) Anmeldetag: 06.11.2013
(51) Int. Cl.: A47G 25/06, H02G 3/14, A47K 1/09, A47K 10/10

(54) **Wand-Aufhänge-und/oder Abstellvorrichtung**
Wall suspension and/or placement device
Dispositif de suspension murale et/ou de stationnement

(30) Priorität: 28.11.2012 DE 102012023213; 01.08.2013 DE 102013012728
(43) Veröffentlichungstag der Anmeldung: 04.06.2014
(73) Patentinhaber: ABB AG, 68309 Mannheim (DE)
(72) Erfinder: Lange, Manfred, 44229 Dortmund (DE); Ewers, Manfred, 58239 Schwerte (DE); Lerke, Richard, 58135 Hagen (DE); Gerrath, Volker, 58791 Werdohl-Eveking (DE); Wiese, Michael, 42897 Remscheid (DE)

(56) Entgegenhaltungen:
- US-A- 3 596 861
- US-A1- 2011 303 433

## Beschreibung

Die Erfindung betrifft eine Wand-Aufhänge- und/oder Abstellvorrichtung.

In einer Wohnung besteht oftmals der Wunsch nach zusätzlichen Ablage- und Aufbewahrungsmöglichkeiten, vor allem im Küchenbereich und im Badezimmer, aber auch in weiteren funktional genutzten Räumen, wie Arbeitszimmer, Büro, Werkstatt usw. Hierzu wird unterschiedliches Zubehör unterschiedlicher Hersteller mit unterschiedlicher Ausführungsform angeboten.

Aus der DE 201 11 197 U1 ist eine Aufhänge-Vorrichtung bekannt, welche zum Aufhängen von Küchen- oder Bad-Gegenständen dient und mindestens zwei an einer Gebäude-Wand zu befestigende Wand-Abstands-Elemente und eine durch die Wand-Abstands-Elemente fixierbare Aufhänge-Leiste umfasst. Die Befestigung der Wand-Abstands-Elemente an einer Gebäudewand erfolgt mittels Befestigungsschrauben.

Aus der DE 20 2005 007 471 U1 ist eine Vorrichtung zum Aufhängen bzw. Abstellen von Gegenständen bekannt, insbesondere in Küche und Bad, umfassend eine Mehrzahl von runden Stangen aus einem harten Material, insbesondere Edelstahl, welche an Kreuzungspunkten senkrecht zueinander verbunden sind. Die Montage erfolgt mittels Schrauben und Dübeln.

Aus der US 3 596 861 A ist eine Wandkonsole für Badezimmereinrichtungen bekannt, mit einem kastenförmigen Rahmen, mit einem Konsolenelement und einer an einer Wandfläche befestigbaren Tragplatte, die Gleitführungen mit Flanschen aufweist. Die Flansche sind parallel zueinander angeordnet. Ein Federelement drückt das Konsolenelement elastisch von dem Rahmen und der Tragplatte weg.

Diese Aufgabe wird erfindungsgemäß gelöst durch eine Wand-Aufhänge- und/oder Abstellvorrichtung,
- mit einem Grundträger, welcher aus einer analog eines Tragrings eines Elektroinstallationsgerätes ausgebildeten Grundplatte besteht, die auf ihrer Rückseite mit einem Klebepad versehen ist und auf ihrer Vorderseite eine Kappen-Befestigung zur Montage eines Adapters nach Wahl aufweist,
- mit einem Adapter, welcher eine analog einer Zentralscheibe eines Elektroinstallationsgerätes ausgebildete Kappe aufweist, die auf ihrer Rückseite mit einem Montagemittel für die Befestigung an der Kappen-Befestigung des Grundträgers versehen ist und
- mit einem den Adapter umschließenden Abdeckrahmen eines Unterputz-Schalterprogramms, wobei der Abdeckrahmen durch den montierten Adapter befestigt ist,
- und die Kappen-Befestigung in Form eines Gewindes/Gewindeeinsatzes /Gewindeloches oder Gewindebuchse ausgebildet ist, oder in Form eines Befestigungsstutzens ausgebildet ist, wobei dann die Kappe aus zwei getrennten Bauteilen aufgebaut ist, nämlich aus einer Zentralscheibe mit einer Öffnung zum Durchgreifen des Befestigungsstutzens und einem, vorzugsweise als Haken ausgeführtem, Befestigungselement, wobei das Befestigungselement aus der Vorderseite der Zentralscheibe herausragt.

Die mit der Erfindung erzielbaren Vorteile liegen insbesondere darin, dass eine optisch und gestalterisch attraktive Zubehör-Integration in eine für Elektroinstallationsgeräte verfügbare Unterputz-Schalterprogrammserie zum Aufhängen oder Abstellen von Küchen-Gegenständen, Bad-Gegenständen oder sonstigen Gegenständen in einfacher Weise ermöglicht wird, wobei die vorhandene Elektroinstallation genutzt und erweitert wird, ohne dass dabei hochwertige Fliesen zerstört werden müssen. Es können in einfacher Weise zusätzliche Ablagen und Aufbewahrungen mit einem der installierten Unterputz-Schalterprogrammserie entsprechenden Design geschaffen werden. Da hierfür keinerlei zusätzliche Unterputz-Gerätedosen und auch keine Bohrarbeiten erforderlich sind, fällt keine Verunreinigung bei der Montage an. Es ist auch ein nachträglicher Einbau jederzeit möglich, indem vorhandene Abdeckrahmen durch entsprechend erweiterte Mehrfach-Abdeckrahmen ersetzt werden, beispielsweise wird ein 1fach-Abddeckrahmen durch einen 2fach Abdeckrahmen ersetzt oder es wird ein 2fach Abdeckrahmen durch einen 3fach Abdeckrahmen ersetzt.

Selbstverständlich kann die Ausrichtung der vorgeschlagenen Zubehör-Installation sowohl in der Horizontalen als auch in der Vertikalen erfolgen.

Die angesprochenen und für die Erfindung verwendeten Unterputz-Schalterprogrammserien sind in vielfältiger Art mit unterschiedlichem Design, unterschiedlicher Farbgebung und unter Einsatz unterschiedlicher Materialien (z. B. Kunststoff, Metall, Glas, Keramik) verfügbar. Die vorgeschlagene Wand-Aufhänge- und/oder Abstellvorrichtung ist unmittelbar mit Elektroinstallationsgeräten, wie Steckdosen, Schalter, Dimmer, Tastsensoren, EIB/KONNEX-Geräte der Hauskommunikation, Bewegungsmelder usw. kombinierbar oder alternativ auch als Einzelvorrichtung - mit lediglich einem Abdeckrahmen - realisierbar.

Gemäß einer ersten Ausführungsform kann die Kappen-Befestigung in Form eines Befestigungsstutzens ausgebildet sein. Dieser Befestigungsstutzen kann ein rundes Profil oder ein beliebiges Vieleckprofil aufweisen, z. B. ein rechteckförmiges oder ein quadratisches Profil. Dementsprechend ist in diesem Fall das Befestigungselement des Adapters in Form einer aufsteckbaren Hülse mit gleichartigem Profil ausgebildet.

Gemäß einer zweiten Ausführungsform kann die Kappen-Befestigung in Form eines Gewindelochs oder einer Gewindebuchse ausgebildet sein. Dementsprechend ist in diesem Fall das Montagemittel des Adapters in Form einer Gewindeschraube ausgebildet

In vorteilhafter Weiterbildung kann die Kappen-Befestigung an einer Ausprägung / Versteifung des Grundträgers angeordnet sein.

Vorzugsweise unterbindet bei der Verbindung zwischen der Kappen-Befestigung und dem Montagemittel eine Sicherung ein Verdrehen des Adapters. Eine solche Sicherung ist insbesondere für die vorstehend erwähnten Fälle vorteilhaft, bei welchen der Befestigungsstutzen ein rundes Profil aufweist oder bei welchen die Befestigung mittels eines Gewindes erfolgt.

Gemäß einer alternativen Ausführungsform umfasst der Tragring eines Elektroinstallationsgerätes zusätzlich auch die Grundplatte, d. h. der konventionelle Tragring eines Elektroinstallationsgerätes und die Grundplatte sind vorzugsweise einstückig miteinander verbunden.

Die Adapter sind vielfältig in unterschiedlichen Ausführungsformen realisierbar. Wahlweise kann die Kappe eines Adapters auf ihrer Vorderseite beispielsweise
- einen Leistenhalter zur Befestigung einer Leiste / Magnetleiste oder
- ein Ablagebord oder
- einen Haken für Handtücher / Geschirrtücher / Küchentücher oder
- eine Halterung für einen Haartrockner oder
- eine Halterung für Elektrozahnbürsten / Zahnbürsten oder
- eine Halterung für einen Zahnputzbecher oder
- eine Halterung für Kaffeefilter oder
- eine Halterung für einen Stabmixer aufweisen.

Diese möglichen Ausführungsformen des Adapters sind selbstverständlich nicht abschließend.

Die Erfindung wird nachstehend an Hand der in der Zeichnung dargestellten Ausführungsbeispiele erläutert. Es zeigen:
- Fig. 1: eine nicht erfindungsgemäße Wand-Aufhänge- und/oder Abstellvorrichtung, welche zur Montage einer Leiste / Magnetleiste dient,
- Fig. 2: eine nicht erfindungsgemäße Wand-Aufhänge- und/oder Abstellvorrichtung, welche ein Ablagebord umfasst,
- Fig. 3: einen Grundträger der nicht erfindungsgemäßen Wand-Aufhänge- und/oder Abstellvorrichtung vor der Montage eines Adapters und eines Abdeckrahmens,
- Fig. 4: eine Sicht auf die Rückseite eines nicht erfindungsgemäßen Grundträgers,
- Fig. 5: eine Seitenansicht eines nicht erfindungsgemäßen Grundträgers,
- Fig. 6: einen einen Leistenhalter aufweisenden nicht erfindungsgemäßen Adapter,
- Fig. 7: einen ein Ablagebord aufweisenden nicht erfindungsgemäßen Adapter,
- Fig. 8: eine Sicht auf die Rückseite eines nicht erfindungsgemäßen Adapters,
- Fig. 9: eine Konfiguration mit Grundträger und Abdeckrahmen vor der Montage des nicht erfindungsgemäßen Adapters,
- Fig. 10: eine fertiggestellte nicht erfindungsgemäße Wand-Aufhänge- und/oder Abstellvorrichtung mit Adapter und Abdeckrahmen,
- Fig. 11, 12: Ansichten der Vorderseite und der Rückseite einer erfindungsgemäßen Ausführungsform mit alternativ ausgebildetem Grundträger,
- Fig. 13: eine weitere erfindungsgemäße Ausführungsform der Wand-Aufhängevorrichtung mit einer Sicht auf die Unterseite der Aufhängevorrichtung mit einem Abdeckrahmen und dem Zubehörgerät (Haken) auf dem Befestigungsdorn in außermittiger Anordnung und mit einer Madenschraube fixiert,
- Fig. 14: eine weitere erfindungsgemäße Ausführungsform der Wand-Aufhängevorrichtung mit einer Sicht auf die Oberseite der Aufhängevorrichtung mit einem Abdeckrahmen und mit einem Befestigungsdorn (im Schnitt) in mittiger Anordnung, jedoch ohne das Zubehörgerät,
- Fig. 15,16,17: einen Tragring mit dem außermittig integrierten Befestigungsdorn und einem darüber gesetztem Abdeckrahmen bzw. zusätzlich noch mit einer über den Befestigungsdorn geschobenen Zentralscheibe eines Schalterserienprogrammes, einer erfindungsgemäßen Wand-Aufhängevorrichtung,
- Fig. 18: eine beispielhafte erfindungsgemäße Wand-Aufhängevorrichtung mit einem auf den Befestigungsdorn aufgesteckten bzw. aufgeschobenen Haken, und
- Fig. 19: eine Schnittansicht der in Fig. 18 gezeigten erfindungsgemäßen Wand-Aufhängevorrichtung.

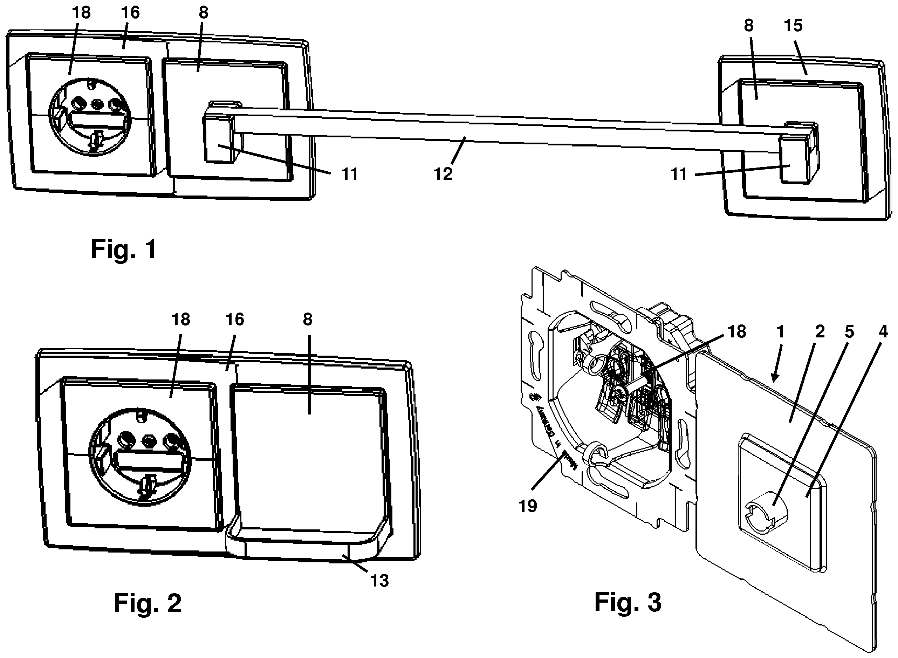

In Fig. 1 ist eine nicht erfindungsgemäße Wand-Aufhänge- und/oder Abstellvorrichtung dargestellt, welche zur Montage einer Leiste / Magnetleiste dient. Im gezeigten konkreten Anwendungsfall wird eine Leiste / Magnetleiste 12 an ihren beiden Enden mittels eines Leistenhalters 11 gehalten. Die Leistenhalter 11 sind jeweils an der Vorderseite einer Kappe 8 befestigt, wobei ein Abdeckrahmen jede der beiden Kappen 8 umfasst. Beim gezeigten Ausführungsbeispiel handelt es sich einerseits um einen 1fachen Abdeckrahmen 15 und andererseits um einen 2fachen Abdeckrahmen 16, welcher zusätzlich einen Steckdosen-Einsatz 18 umfasst.

Die Anordnung von zwei Halterungen muss dabei nicht zwingend in horizontaler Ausrichtung erfolgen, wie in Figur 1 dargestellt. Vertikale Anordnungen sind z. B. für Spender von Kaffeepads oder Wattepads von Vorteil.

In Fig. 2 ist eine nicht erfindungsgemäße Wand-Aufhänge- und/oder Abstellvorrichtung dargestellt, welche ein Ablagebord umfasst. Im gezeigten konkreten Anwendungsfall ist wiederum der einerseits den Steckdosen-Einsatz 18 umfassende 2fach Abdeckrahmen 16 zu erkennen, welcher andererseits eine Kappe 8 umfasst, die an ihrer Vorderseite ein Ablagebord 13 aufweist.

In Fig. 3 ist ein Grundträger der nicht erfindungsgemäßen Wand-Aufhänge- und/oder Abstellvorrichtung vor der Montage eines Adapters und eines Abdeckrahmens dargestellt. Das gezeigte Ausführungsbeispiel bezieht sich auf die unter Fig. 1 gezeigte und behandelte Ausführungsform. Es wird davon ausgegangen, dass der Steckdosen-Einsatz 18 in einer (nicht gezeigten) Unterputz-Gerätedose installiert ist. Unmittelbar neben dem Steckdosen-Einsatz 18 mit seinem Tragring 19 wird ein Grundträger 1 auf die Wandoberfläche aufgeklebt. Der Grundträger 1 weist eine vorzugsweise aus einem Metall bestehende quadratische Grundplatte 2 mit zentrischer Ausprägung 4 / Versteifung an der Vorderseite auf. In der Mitte der Ausprägung / Versteifung 4 ist eine vorzugsweise in Form eines Stutzens ausgeführte Kappen-Befestigung 5 für die Montage eines gewünschten Adapters vorgesehen. Die Grundplatte 2 ist bezüglich ihrer Dimensionierung an einen Tragring eines herkömmlichen Elektroinstallationsgerätes angepasst, so dass der Tragring des Steckdosen-Einsatzes 18 und die Grundplatte 2 unmittelbar ohne jeden Zwischenraum nebeneinander angeordnet sind.

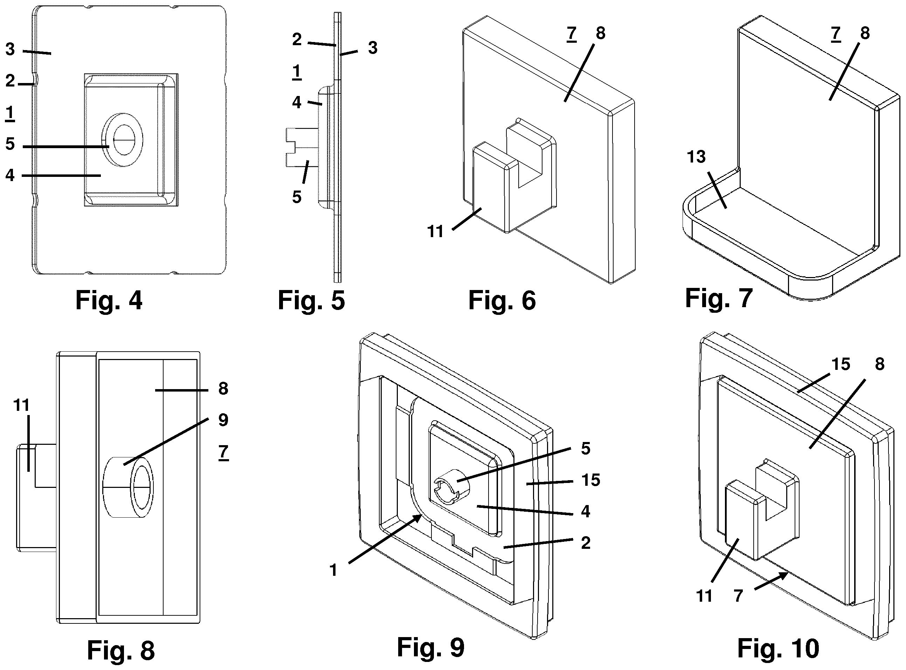

In Fig. 4 ist eine Sicht auf die Rückseite eines nicht erfindungsgemäßen Grundträgers dargestellt. Die Grundplatte 2 des Grundträgers 1 weist auf ihrer Rückseite ein Klebepad (Klebeband) 3 auf. Ferner zeigt Fig. 4 die Ausprägung / Versteifung 4 von ihrer Rückseite aus sowie die Basis der Kappen-Befestigung 5.

In Fig. 5 ist eine Seitenansicht eines nicht erfindungsgemäßen Grundträgers 1 dargestellt. Es sind die Grundplatte 2 mit rückseitigem Klebepad 3 und die Ausprägung / Versteifung 4 an der Vorderseite inklusive der zentralen Kappen-Befestigung 5 zu erkennen.

In den Figuren 6 und 7 sind unterschiedliche nicht erfindungsgemäße Adapter gezeigt, welche wahlweise am Grundträger 1 befestigt werden können:
- In Fig. 6 ist ein einen Leistenhalter aufweisender Adapter 7 dargestellt. Dieser Adapter 7 mit einem an der Frontseite der Kappe 8 vorgesehenem Leistenhalter 11 ist vorstehend bereits im Ausführungsbeispiel gemäß Fig. 1 gezeigt.
- In Fig. 7 ist ein ein Ablagebord aufweisender Adapter 7 dargestellt. Dieser Adapter 7 mit einem an der Frontseite der Kappe 8 vorgesehenem Ablagebord 13 ist vorstehend bereits im Beispiel gemäß Fig. 2 gezeigt.

Die in den Figuren 6 und 7 gezeigten nicht erfindungsgemäßen Adapter 7 sind lediglich zwei Beispiele aus einer Vielzahl sehr unterschiedlich ausgestalteter Adapter. Mit dem Grundträger 1 können im Badezimmer beispielsweise folgende Adapter (Zusatzträger) 7 verbunden werden:
- Halterung für einen Haartrockner,
- Halterung oder Aufbewahrungsbox für Elektrozahnbürsten oder Zahnbürsten,
- Halterung oder Aufbewahrungsbox für Zahncreme,
- Halterung für einen Zahnputzbecher,
- Ablagebord für Zahnseide,
- Ablagebord oder Aufbewahrungsbox für einen Duftspender,
- Ablagebord oder Aufbewahrungsbox für eine Parfümflasche,
- Spender für Wattepads,
- Spender für Wattestäbchen,
- Haken für Handtücher, z. B. in verchromter Ausführung.

Mit dem Grundträger 1 können in der Küche beispielsweise folgende Adapter (Zusatzträger) 7 verbunden werden:
- Halterung oder Ablagebord für Pfeffer und Salz,
- Halterung oder Ablagebord für Essig und Öl,
- Halterung oder Aufbewahrungsbox für Kaffeefilter,
- Halterung für einen Stabmixer,
- Halterung oder Aufbewahrungsbox für einen Notizzettelblock inklusive Stift,
- Halterung für eine Magnetleiste, beispielsweise zur Halterung von Messern,
- Halterung für eine Leiste, beispielsweise zum Aufhängung von S-förmigen Haken, welche zum Aufhängen von Kochgeräten dienen,
- Ablagebord für einen Kurzzeitmesser,
- Spender für Kaffeepads,
- Spender für Zahnstocher.
- Haken für Geschirrtücher oder Küchentücher, beispielsweise in verchromter Ausführung,
- Abroller für Küchenrollen oder Folien.

In Fig. 8 ist eine Sicht auf die Rückseite eines nicht erfindungsgemäßen Adapters 7 dargestellt. An der Rückseite der Kappe 8 ist zentrisch ein vorzugsweise in Form einer Hülse ausgebildetes Montagemittel 9 vorgesehen, welches zur Befestigung auf die insbesondere in Form eines Stutzens ausgebildete Kappen-Befestigung 5 - siehe Figur 3 - aufzustecken ist. Zueinander korrespondierende Rastmittel der Kappen-Befestigung 5 und des Montagemittels 9 - wie beispielsweise in Nuten / Rillen eingreifende Rastnasen - gewährleisten die Arretierung nach dem erfolgten Aufstecken.

In Fig. 9 ist eines nicht erfindungsgemäße Konfiguration mit Grundträger und Abdeckrahmen vor der Montage des Adapters dargestellt. Es sind der Grundträger 1 mit Grundplatte 2, Ausprägung / Versteifung 4 und Kappen-Befestigung 5 sowie der den Grundträger 1 umschließende 1fach Abdeckrahmen 15 gezeigt. Die Halterung / Arretierung des Abdeckrahmens erfolgt "automatisch" durch Aufstecken des Adapters 7.

In Fig. 10 ist eine fertiggestellte nicht erfindungsgemäße Wand-Aufhänge- und/oder Abstellvorrichtung mit Adapter und Abdeckrahmen dargestellt. Es sind die Kappe 8 und der Leistenhalter 11 des Adapters 7 sowie der 1fach Abdeckrahmen 15 zu erkennen.

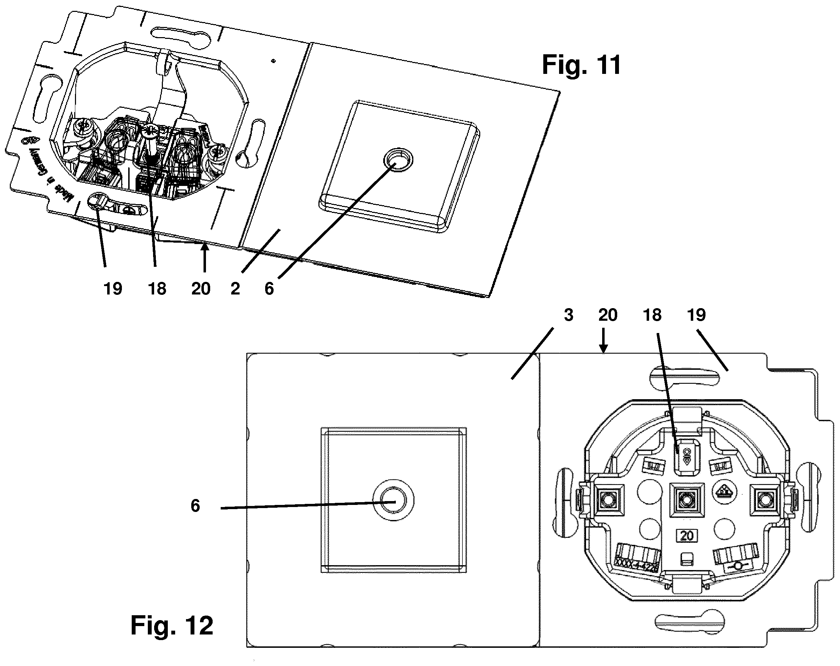

In den Figuren 11 und 12 sind Ansichten der Vorderseite und der Rückseite einer Ausführungsform mit alternativ ausgebildetem Grundträger dargestellt. Bei dieser Ausführungsform ist ein speziell ausgebildeter Tragring 20 vorgesehen, welcher sich aus dem Tragring 19 zur Aufnahme des Steckdosen-Einsatzes 18 und der Grundplatte 2 zusammensetzt. Figur 12 zeigt das auf der Rückseite der Grundplatte 2 angebrachte Klebepad 3. Zur Kappenbefestigung ist ein Gewinde / Gewindeeinsatz / Gewindeloch / Gewindebuchse 6 vorgesehen.

Bei dieser in den Figuren 11 und 12 gezeigten Ausführungsform besteht der zusätzliche Vorteil, dass die Fixierung an der Wand sowohl über das Klebepad 3 als auch über die konventionelle Schraubbefestigung über die Schlüssellöcher des Tragrings oder Spreizbefestigung über die Federspreizen des Elektroinstallationsgerätes erfolgt. Somit können größere Traglasten aufgenommen werden

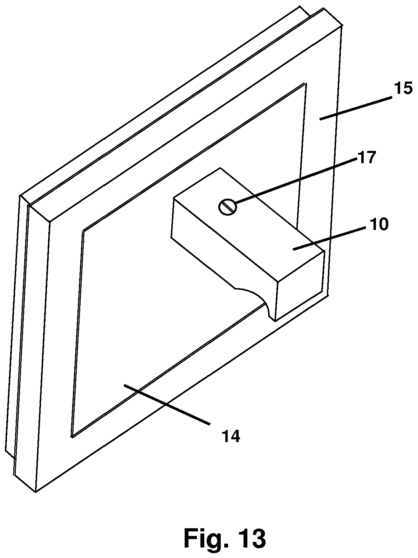

Fig. 13 zeigt eine weitere Ausführungsform der Wand-Aufhängevorrichtung mit einer Sicht auf die Unterseite der Aufhängevorrichtung, bei der die Kappe 8 aus zwei getrennten Bauteilen besteht, nämlich aus einer Zentralscheibe 14 mit einer Öffnung zum Durchgreifen eines Aufnahmedorns/Befestigungsdorns und einem Befestigungselement oder Zubehörgerät 10, welches beispielsweise als Haken ausgeführt sein kann.

Der Haken 10 ist am / auf dem Befestigungsdorn befestigt und ragt aus der Vorderseite der Zentralscheibe 14 heraus.

Zur Befestigung des über den Befestigungsdorn geschobenen Hakens 10 ist eine Madenschraube 17 vorgesehen, welche eine Verbindung zwischen dem vom Haken 10 verdeckten und hier nicht sichtbaren Befestigungsdorn und dem Haken 10 ermöglicht.

In vorteilhafter Weise ist der Befestigungsdorn 5 und/oder die Grundplatte 2 aus einem nicht leitenden Material hergestellt, um Spannungsverschleppungen von einer unmittelbar benachbarten Steckdose zu verhindern.

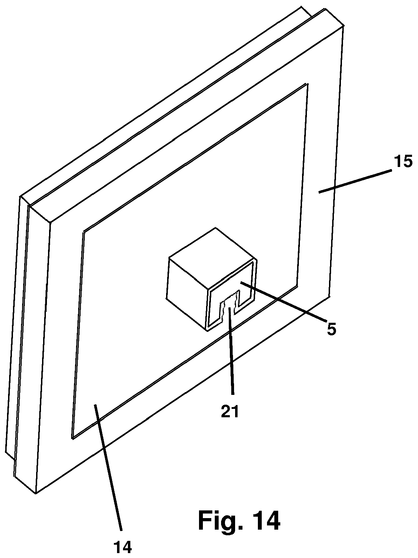

Fig. 14 zeigt eine weitere Ausführungsform der erfindungsgemäßen Wand-Aufhängevorrichtung mit einem Abdeckrahmen 15 und einen Befestigungsdorn 5 in Schnittdarstellung, wobei der Befestigungsdorn mittig aus der Zentralscheibe 14 herausragt. In dieser Darstellung ist die Madenschraube noch nicht in das dafür vorgesehene Gewinde 21 eingeschraubt ist.

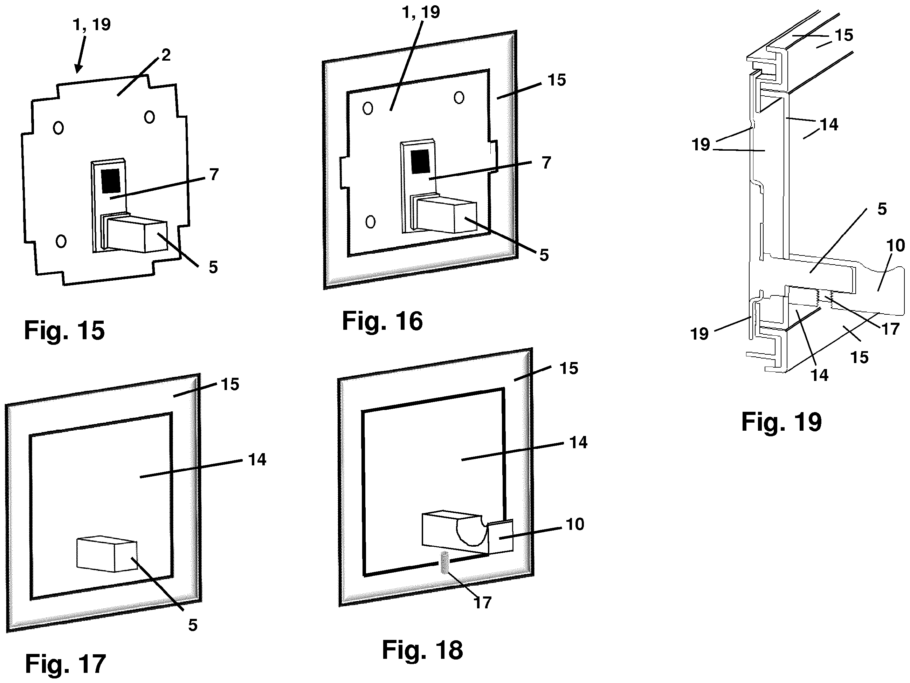

Fig. 15 zeigt einen Tragring 19, der den Grundträger 1 bildet, der in der Figur 13 gezeigten Wand-Aufhängevorrichtung mit dem integrierten Befestigungsdorn 5, welcher beispielsweise mit einem mit einem beiliegenden Klebepad auf die Wandoberfläche aufklebbar ist. Für eine Aneinanderreihung an ein vorhandenes Installationsgerät muss das dabei ein Spurmaß, üblicherweise von 71 mm, beachtet werden.

Bei einer vorgesehenen Belastung mit schweren oder dynamischen Lasten am Befestigungselement bzw. Zubehörgerät 10 des Adapters 7 sind zusätzliche Verschraubungen des Tragrings 19 mit der Wandoberfläche vorgesehen.

In der Fig. 16 ist der Tragring 19 aus Figur 13, 14 und 15 mit dem integrierten Befestigungsdorn 5 und einem darüber gesetzten Abdeckrahmen 15 und in der Fig. 17 zusätzlich noch mit der über den Befestigungsdorn 5 geschobenen Zentralscheibe 14 eines Schalterserienprogrammes gezeigt. Die Zentralscheibe 14 ist in ihrem unteren Bereich mit der Öffnung zum Durchgreifen des Befestigungsdorns 5 ausgestattet.

Fig. 18 zeigt die in den Figuren 13 bis 17 beschriebenen beispielhafte Wand-Aufhängevorrichtung mit einem auf den Befestigungsdorn 5 aufgesteckten bzw. aufgeschobenen Haken 10, welcher mit der Madenschraube 17 an der Unterseite des am Befestigungsdorn 5 sicherbar ist.

Die Figur 19 zeigt eine Schnittansicht der in Fig. 18 gezeigten Wand-Aufhängevorrichtung mit einem durch die Öffnung in der Zentralscheibe 14 geführten Befestigungsdorn 5, auf den der Haken 10 aufgeschoben und mittels einer hier nicht gezeigten Madenschraube 17 gesichert ist.

Wenn vorstehend beispielhaft von einem Steckdosen-Einsatz 18 die Rede ist, so sind die entsprechenden Ausführungen in gleicher Weise selbstverständlich auch für ähnliche Einsätze, wie Schalter-Einsätze, Dimmer-Einsätze und sonstige Unterputz-Gerätesockel gültig.

### Bezugszeichenliste

- 1: Grundträger
- 2: Grundplatte
- 3: Klebepad
- 4: Ausprägung / Versteifung
- 5: Kappen-Befestigung, beispielsweise Befestigungsstutzen, Befestigungsdorn
- 6: Gewinde / Gewindeeinsatz / Gewindeloch / Gewindebuchse
- 7: Adapter (Zusatzträger)
- 8: Kappe
- 9: Montagemittel, insbesondere Hülse oder Gewindeschraube
- 10: Zubehörgerät, Befestigungselement, Haken
- 11: Leistenhalter
- 12: Leiste / Magnetleiste
- 13: Ablagebord
- 14: Zentralscheibe
- 15: Abdeckrahmen 1fach
- 16: Abdeckrahmen 2fach
- 17: Madenschraube
- 18: Steckdosen-Einsatz
- 19: Tragring des Steckdosen-Einsatzes
- 20: Tragring inklusive Grundplatte
- 21: Gewinde für Madenschraube

## Patentansprüche

1. Wand-Aufhänge- und/oder Abstellvorrichtung,
• mit einem Grundträger (1), welcher aus einer analog eines Tragrings eines Elektroinstallationsgerätes ausgebildeten Grundplatte (2) besteht, die auf ihrer Rückseite mit einem Klebepad (3) versehen ist und auf ihrer Vorderseite eine Kappen-Befestigung (5, 6) zur Montage eines Adapters (7) nach Wahl aufweist,
• mit einem Adapter (7), welcher eine analog einer Zentralscheibe eines Elektroinstallationsgerätes ausgebildete Kappe (8) aufweist, die auf ihrer Rückseite mit einem Montagemittel (9) für die Befestigung an der Kappen-Befestigung (5) des Grundträgers (1) versehen ist, und
• mit einem den Adapter (7) umschließenden Abdeckrahmen (15, 16) eines Unterputz-Schalterprogramms, wobei der Abdeckrahmen (15, 16) durch den montierten Adapter (7) befestigt ist, und
• die Kappen-Befestigung (5) in Form eines Gewindes / Gewindeeinsatzes / Gewindeloches, oder Gewindebuchse (6) ausgebildet ist, oder in Form eines Befestigungsstutzens (5) ausgebildet ist, wobei dann die Kappe (8) aus zwei getrennten Bauteilen (10, 14) aufgebaut ist, nämlich aus einer Zentralscheibe (14) mit einer Öffnung zum Durchgreifen des Befestigungsstutzens (5) und einem, vorzugsweise als Haken ausgeführtem, Befestigungselement (10), wobei das Befestigungselement (10) aus der Vorderseite der Zentralscheibe (14) herausragt.

2. Wand-Aufhänge- und/oder Abstellvorrichtung nach Anspruch 1, **dadurch gekennzeichnet, dass** die Kappen-Befestigung (5) an einer Ausprägung / Versteifung (4) des Grundträgers (1) angeordnet ist.

3. Wand-Aufhänge- und/oder Abstellvorrichtung nach einem der vorstehenden Ansprüche, **dadurch gekennzeichnet, dass** bei der Verbindung zwischen der Kappen-Befestigung (5) und dem Montagemittel (9) eine Sicherung ein Verdrehen des Adapters (7) unterbindet.

4. Wand-Aufhänge- und/oder Abstellvorrichtung nach einem der vorstehenden Ansprüche, **dadurch gekennzeichnet, dass** der Tragring eines Elektroinstallationsgerätes zusätzlich auch die Grundplatte (2) umfasst.

5. Wand-Aufhänge- und/oder Abstellvorrichtung nach einem der vorstehenden Ansprüche, **dadurch gekennzeichnet, dass** die Kappe (8) des Adapters (7) auf ihrer Vorderseite einen Leistenhalter (11) zur Befestigung einer Leiste / Magnetleiste (12) aufweist.

6. Wand-Aufhänge- und/oder Abstellvorrichtung nach einem der vorstehenden Ansprüche, **dadurch gekennzeichnet, dass** die Kappe (8) des Adapters (7) auf ihrer Vorderseite ein Ablagebord (13) aufweist.

7. Wand-Aufhänge- und/oder Abstellvorrichtung nach einem der vorstehenden Ansprüche, **dadurch gekennzeichnet, dass** die Kappe (8) des Adapters (7) auf ihrer Vorderseite einen Haken aufweist.

8. Wand-Aufhänge- und/oder Abstellvorrichtung nach einem der vorstehenden Ansprüche, **dadurch gekennzeichnet, dass** die Kappe (8) des Adapters (7) auf ihrer Vorderseite eine Halterung für einen Haartrockner aufweist.

9. Wand-Aufhänge- und/oder Abstellvorrichtung nach einem der vorstehenden Ansprüche, **dadurch gekennzeichnet, dass** die Kappe (8) des Adapters (7) auf ihrer Vorderseite eine Halterung für Elektrozahnbürsten/Zahnbürsten aufweist.

10. Wand-Aufhänge- und/oder Abstellvorrichtung nach einem der vorstehenden Ansprüche, **dadurch gekennzeichnet, dass** die Kappe (8) des Adapters (7) auf ihrer Vorderseite eine Halterung für einen Zahnputzbecher aufweist.

11. Wand-Aufhänge- und/oder Abstellvorrichtung nach einem der vorstehenden Ansprüche, **dadurch gekennzeichnet, dass** die Kappe (8) des Adapters (7) auf ihrer Vorderseite eine Halterung für Kaffeefilter aufweist.

12. Wand-Aufhänge- und/oder Abstellvorrichtung nach Anspruch 1, **dadurch gekennzeichnet, dass** zur Befestigung des über den Befestigungsstutzen (5) geschobenen Befestigungselements (10) eine Madenschraube (17) vorgesehen ist, welche eine Verbindung zwischen dem Befestigungselement (10) und dem Befestigungsstutzen (5) bereitstellt.

13. Wand-Aufhänge- und/oder Abstellvorrichtung nach Anspruch 1, **dadurch gekennzeichnet, dass** der Befestigungsstutzen (5) in einer mittigen oder einer außermittigen Position in der Grundplatte (2) befestigt ist und die Zentralscheibe (14) korrespondierende Öffnungen zum Durchgreifen des Befestigungsstutzens (5) aufweist.

14. Wand-Aufhänge- und/oder Abstellvorrichtung nach Anspruch 1, **dadurch gekennzeichnet, dass** der Befestigungsstutzen (5) und/oder die Grundplatte (2) aus einem nicht leitenden Material hergestellt sind/ist, um Spannungsverschleppungen von einer unmittelbar benachbarten Steckdose zu verhindern.

## Claims

1. Wall-mounted suspension and/or placement apparatus
• comprising a main support (1) which consists of a base plate (2) which is designed analogously to a supporting ring of an electrical installation device and which is provided, on its rear side, with an adhesive pad (3) and has, on its front side, a cap fastener (5, 6) for mounting an adapter (7) as desired,
• comprising an adapter (7) which has a cap (8) which is designed analogously to a central panel of an electrical installation device and which is provided, on its rear side, with a mounting means (9) for fastening to the cap fastener (5) of the main support (1), and
• comprising a covering frame (15, 16) of a flush-mounted switch range, which covering frame surrounds the adapter (7), wherein the covering frame (15, 16) is fastened by the mounted adapter (7), and
• the cap fastener (5) is designed in the form of a thread/thread insert/threaded hole/threaded bushing (6), or is designed in the form of a fastening stub (5), wherein the cap (8) is then constructed from two separate components (10, 14), specifically from a central panel (14) with an opening for the fastening stub (5) to pass through and from a fastening element (10) which is preferably embodied as a hook, wherein the fastening element (10) protrudes from the front side of the central panel (14).

2. Wall-mounted suspension and/or placement apparatus according to Claim 1, **characterized in that** the cap fastener (5) is arranged on a shaped portion/reinforced portion (4) of the main support (1).

3. Wall-mounted suspension and/or placement apparatus according to either of the preceding claims, **characterized in that** a safety means prevents twisting of the adapter (7) when the cap fastener (5) and the mounting means (9) are connected.

4. Wall-mounted suspension and/or placement apparatus according to one of the preceding claims, **characterized in that** the supporting ring of an electronic installation device additionally also comprises the base plate (2).

5. Wall-mounted suspension and/or placement apparatus according to one of the preceding claims, **characterized in that** the cap (8) of the adapter (7) has, on its front side, a strip holder (11) for fastening a strip/magnetic strip (12).

6. Wall-mounted suspension and/or placement apparatus according to one of the preceding claims, **characterized in that** the cap (8) of the adapter (7) has, on its front side, a shelf (13).

7. Wall-mounted suspension and/or placement apparatus according to one of the preceding claims, **characterized in that** the cap (8) of the adapter (7) has, on its front side, a hook.

8. Wall-mounted suspension and/or placement apparatus according to one of the preceding claims, **characterized in that** the cap (8) of the adapter (7) has, on its front side, a holder for a hairdryer.

9. Wall-mounted suspension and/or placement apparatus according to one of the preceding claims, **characterized in that** the cap (8) of the adapter (7) has, on its front side, a holder for electric toothbrushes/toothbrushes.

10. Wall-mounted suspension and/or placement apparatus according to one of the preceding claims, **characterized in that** the cap (8) of the adapter (7) has, on its front side, a holder for a toothbrush tumbler.

11. Wall-mounted suspension and/or placement apparatus according to one of the preceding claims, **characterized in that** the cap (8) of the adapter (7) has, on its front side, a holder for coffee filters.

12. Wall-mounted suspension and/or placement apparatus according to Claim 1, **characterized in that** a grub screw (17) is provided for fastening the fastening element (10) which is pushed over the fastening stub (5), the said grub screw providing a connection between the fastening element (10) and the fastening stub (5).

13. Wall-mounted suspension and/or placement apparatus according to Claim 1, **characterized in that** the fastening stub (5) is fastened in a central or an eccentric position in the base plate (2), and the central panel (14) has corresponding openings for the fastening stub (5) to pass through.

14. Wall-mounted suspension and/or placement apparatus according to Claim 1, **characterized in that** the fastening stub (5) and/or the base plate (2) are/is produced from a non-conductive material in order to prevent voltage transfer from an immediately adjacent power socket.

## Revendications

1. Dispositif d'accrochage et/ou de dépose mural,
- comprenant un support de base (1) qui se compose d'une platine de base (2) de configuration similaire à un anneau porteur d'un appareillage d'installation électrique et qui comporte, sur son côté arrière, une pastille adhésive (3) et, sur son côté avant, une fixation de couvercle (5, 6) servant au montage d'un adaptateur (7) au choix,
- comprenant un adaptateur (7) qui possède un couvercle (8) de configuration similaire à une plaque centrale d'un appareillage d'installation électrique qui, sur son côté arrière, est pourvu d'un moyen de montage (9) servant à la fixation sur la fixation de couvercle (5) du support de base (1), et
- comprenant un cadre de recouvrement (15, 16) d'une gamme d'interrupteurs à montage encastré qui entoure l'adaptateur (7), le cadre de recouvrement (15, 16) étant fixé par l'adaptateur (7) monté, et
- la fixation de couvercle (5) étant réalisée sous la forme d'un filet/insert fileté/trou taraudé ou douille taraudée (6), ou sous la forme d'un manchon de fixation (5), le couvercle (8) étant alors constitué de deux éléments structuraux (10, 14) séparés, à savoir d'une plaque centrale (14) dotée d'une ouverture pour la pénétration du manchon de fixation (5) et d'un élément de fixation (10) de préférence réalisé sous la forme d'un crochet, l'élément de fixation (10) faisant saillie hors du côté avant de la plaque centrale (14).

2. Dispositif d'accrochage et/ou de dépose mural selon la revendication 1, **caractérisé en ce que** la fixation de couvercle (5) est disposée au niveau d'une empreinte/d'un raidissement (4) du support de base (1).

3. Dispositif d'accrochage et/ou de dépose mural selon l'une des revendications précédentes, **caractérisé en ce que** lors de la liaison entre la fixation de couvercle (5) et le moyen de montage (9), une sécurité empêche une torsion de l'adaptateur (7).

4. Dispositif d'accrochage et/ou de dépose mural selon l'une des revendications précédentes, **caractérisé en ce que** l'anneau porteur d'un appareillage d'installation électrique comporte en plus également la plaque de base (2).

5. Dispositif d'accrochage et/ou de dépose mural selon l'une des revendications précédentes, **caractérisé en ce que** le couvercle (8) de l'adaptateur (7) possède sur son côté avant un porte-baguette (11) destiné à la fixation d'une baguette/baguette magnétique (12).

6. Dispositif d'accrochage et/ou de dépose mural selon l'une des revendications précédentes, **caractérisé en ce que** le couvercle (8) de l'adaptateur (7) possède un bord de dépose (13) sur son côté avant.

7. Dispositif d'accrochage et/ou de dépose mural selon l'une des revendications précédentes, **caractérisé en ce que** le couvercle (8) de l'adaptateur (7) possède un crochet sur son côté avant.

8. Dispositif d'accrochage et/ou de dépose mural selon l'une des revendications précédentes, **caractérisé en ce que** le couvercle (8) de l'adaptateur (7) possède un support pour un sèche-cheveux sur son côté avant.

9. Dispositif d'accrochage et/ou de dépose mural selon l'une des revendications précédentes, **caractérisé en ce que** le couvercle (8) de l'adaptateur (7) possède un support pour des brosses à dents électriques/des brosses à dents sur son côté avant.

10. Dispositif d'accrochage et/ou de dépose mural selon l'une des revendications précédentes, **caractérisé en ce que** le couvercle (8) de l'adaptateur (7) possède un support pour un verre à dents sur son côté avant.

11. Dispositif d'accrochage et/ou de dépose mural selon l'une des revendications précédentes, **caractérisé en ce que** le couvercle (8) de l'adaptateur (7) possède un support pour un filtre à café sur son côté avant.

12. Dispositif d'accrochage et/ou de dépose mural selon la revendication 1, **caractérisé en ce que** pour la fixation de l'élément de fixation (10) glissé sur le manchon de fixation (5), il existe une vis sans tête (17) qui produit une liaison entre l'élément de fixation (10) et le manchon de fixation (5).

13. Dispositif d'accrochage et/ou de dépose mural selon la revendication 1, **caractérisé en ce que** le manchon de fixation (5) est fixé dans une position centrée ou excentrée dans la plaque de base (2) et la plaque centrale (14) possède des ouvertures correspondantes pour la pénétration du manchon de fixation (5).

14. Dispositif d'accrochage et/ou de dépose mural selon la revendication 1, **caractérisé en ce que** le manchon de fixation (5) et/ou la plaque de base (2) est/sont fabriqués dans un matériau non conducteur afin d'éviter les transferts de tension depuis une prise électriquement directement voisine.
